(19) **Europäisches Patentamt**

**European Patent Office**

**Office européen des brevets**

(11) **EP 0 901 424 B1**

(12) **EUROPÄISCHE PATENTSCHRIFT**

(45) Veröffentlichungstag und Bekanntmachung des Hinweises auf die Patenterteilung:
**14.08.2002 Patentblatt 2002/33**

(51) Int Cl.⁷: **B60L 5/19**

(21) Anmeldenummer: 97923825.0

(22) Anmeldetag: **15.05.1997**

(86) Internationale Anmeldenummer:
**PCT/DE97/00987**

(87) Internationale Veröffentlichungsnummer:
**WO 97/45286 (04.12.1997 Gazette 1997/52)**

(54) **VERFAHREN ZUR NEIGUNG UND/ODER POSITIONIERUNG EINES AUF EINEM WAGENKASTEN ANGEORDNETEN STROMABNEHMERS**

METHOD OF TILTING AND/OR POSITIONING A CURRENT COLLECTOR DISPOSED ON A COACH BODY

PROCEDE PERMETTANT D'INCLINER ET/OU DE POSITIONNER UN PANTOGRAPHE MONTE SUR UNE CAISSE DE WAGON

(84) Benannte Vertragsstaaten:
**AT CH DE ES FR GB IT LI**

(30) Priorität: **29.05.1996 DE 19621561**

(43) Veröffentlichungstag der Anmeldung:
**17.03.1999 Patentblatt 1999/11**

(73) Patentinhaber: **SIEMENS AKTIENGESELLSCHAFT 80333 München (DE)**

(72) Erfinder:
• **JUNGKUNZ, Clemens D-91056 Erlangen (DE)**
• **LÖBE, Wolfram D-90411 Nürnberg (DE)**
• **MÜLLER, Herbert D-91315 Höchstadt (DE)**

(56) Entgegenhaltungen:
**EP-A- 0 485 273      DE-A- 3 232 153**

• **PATENT ABSTRACTS OF JAPAN vol. 8, no. 6 (M-284) [1498] , 23.März 1984 & JP 58 212302 A (NIPPON KOKUYO TETSUDO), 10.Dezember 1983,**

**Beschreibung**

Die Erfindung betrifft ein Verfahren zur Neigung und/oder Positionierung eines auf einem Wagenkasten angeordneten Stromabnehmers.

Ein derartiger, auf einem Wagenkasten neigbar angeordneter Stromabnehmer ist durch die EP 0 436 993 A1 bekannt. Im bekannten Fall ist der Stromabnehmer über Hydraulikleitungen mit dem hydraulischen Stellantrieb für die Neigung des Wagenkastens verbunden. Der Stromabnehmer bewegt sich mittels Rollen auf einer Schiene, die eine Kreisbahn mit einem Radius bildet, wobei der Mittelpunkt der Kreisbahn mit dem Neigepol des Wagenkastens zusammenfällt. Die Rückstellung des Stromabnehmers erfolgt während der Neigung des Wagenkastens gegenüber der Wiege des Drehgestells und ist damit an den Neigevorgang des Wagenkastens gekoppelt. Der Stromabnehmer wird damit auch nur gegenüber der Wiege zurückgeführt. Die bei Kurvenfahrt durch die Fliehkraft erzeugte Wankbewegung des Wagenkastens, die zum Neigevorgang des Wagenkastens gegenläufig ist, wird hierbei nicht berücksichtigt.

In der DE 44 04 434 A1 wird ein Verfahren beschrieben, mit dem der Kontakt der Stromabnehmerschleifleiste zum Fahrdraht verbessert werden soll. Die aktive Regelung bezieht sich dabei ausschließlich auf vertikale Kräfte und vertikale Bewegungen des Stromabnehmers.

Aufgabe der vorliegenden Erfindung ist es, ein Verfahren zur Neigung und/oder Positionierung eines auf einem Wagenkastens angeordneten Stromabnehmers zu schaffen, das unabhängig von einer Neigung und/oder einer Wankbewegung des Wagenkastens eine schnelle und genaue Ausrichtung des Stromabnehmers in seine gewünschte Neigung und/oder Position erlaubt.

Die Aufgabe wird erfindungsgemäß durch die Merkmale des Anspruchs 1 gelöst. Vorteilhafte Ausgestaltungen der Erfindung sind in den weiteren Ansprüchen beschrieben.

Bei dem erfindungsgemäßen Verfahren zur Neigung und/oder Positionierung eines auf einem Wagenkasten angeordneten Stromabnehmers wird wenigstens ein Rollwinkel-Istwert $\alpha_{WK}$ zwischen dem Wagenkasten und der Gleisebene sowie wenigstens ein Neigewinkel-Istwert $\alpha_{StA}$ für den Stromabnehmer relativ zum Wagenkasten ermittelt. Aus dem Rollwinkel-Istwert $\alpha_{WK}$ und dem Neigewinkel-Istwert $\alpha_{StA}$ wird wenigstens ein Stellsignal für wenigstens eine Stelleinrichtung des Stromabnehmers erzeugt.

Das Verfahren nach Anspruch 1 ist sowohl für Schienenfahrzeuge mit einer Neigeeinrichtung als auch für Schienenfahrzeuge ohne Neigeeinrichtung geeignet. Schienenfahrzeuge, deren Wagenkästen nicht gegenüber ihren Fahrwerken geneigt werden, führen aufgrund der Fahrzeugfederung nur Wankbewegungen aus. Diese führen jedoch bei Kurvenfahrten ebenfalls zu einer Lageänderung des Stromabnehmers. Abhängig von der Art des Schienenfahrzeugs kann der Rollwinkel-Istwert $\alpha_{WK}$ entweder - bei nicht neigbaren Wagenkästen - nur den Wankwinkel (Rollwinkel der Primärfederung $\alpha_{prim}$ und der Sekundärfederung $\alpha_{sek}$) oder - bei vernachlässigbarem Wankwinkel - nur den Neigewinkel $\alpha_N$ des Wagenkastens gegenüber dem Fahrwerk umfassen. Bei den meisten Anwendungen wird jedoch der Rollwinkel-Istwert $\alpha_{WK}$ sowohl den Neigewinkel $\alpha_N$ des Wagenkastens gegenüber dem Fahrwerk als auch den Wankwinkel umfassen.

Weiterhin können mit dem Verfahren nach Anspruch 1 auch Abweichungen der Stromabnehmerlage aufgrund der Querverschiebung des Wagenkastens korrigiert werden.

Die Ausrichtung des Fahrdrahts erfolgt stets relativ zur Gleisebene, so daß Gleisüberhöhungen bereits berücksichtigt sind. Abweichungen des Stromabnehmers von der gewünschten Ausrichtung und Lage treten deshalb nur dann auf, wenn sich der Wagenkasten gegenüber der Gleisebene neigt bzw. das Fahrzeug wankt. Der hierbei auftretende Rollwinkel-Istwert $\alpha_{WK}$ wird erfindungsgemäß zur Verstellung des Stromabnehmers genutzt. Im Gegensatz zu den bisher bekannten Verfahren ist im Rollwinkel-Istwert $\alpha_{WK}$ sowohl die Neigebewegung des Wagenkastens als auch die Wankbewegung des Fahrzeugs enthalten.

Da bei dem Verfahren gemäß Anspruch 1 der Stromabnehmer nicht fest mit dem Fahrwerk verbunden sein muß, ist die momentane Neigung und/oder Lage des Stromabnehmers zur Fahrdrahtebene zu ermitteln. Dies erfolgt erfindungsgemäß durch die Ermittlung des Neigewinkel-Istwertes $\alpha_{StA}$ zwischen dem Wagenkasten und dem Stromabnehmer, da der Neigewinkel-Istwert $\alpha_{StA}$ durch die Stelleinrichtung direkt beeinflußt werden kann.

Mit den ermittelten Größen Rollwinkel-Istwert $\alpha_{WK}$ und Neigewinkel-Istwert $\alpha_{StA}$ läßt sich durch ein Verfahren nach Anspruch 2 und/oder Anspruch 3 eine Ausrichtung des Stromabnehmers lotrecht zum Gleis auch dann erreichen, wenn das Fahrzeug neben einer Neigebewegung auch eine Wankbewegung ausführt, wobei der Wankpol des Fahrzeugs nicht mit dem Neigepol des Wagenkastens übereinstimmen muß. Eine Ausrichtung des Stromabnehmers lotrecht zum Gleis läßt sich in einfacher Weise dadurch erreichen, daß die Neigung und/oder Position des Stromabnehmers durch die Stelleinrichtung so eingestellt wird, daß der Neigewinkel-Istwert $\alpha_{StA}$ gleich dem Rollwinkel-Istwert $\alpha_{WK}$ wird. Da der Rollwinkel-Istwert $\alpha_{WK}$ unabhängig von der Stellbewegung des Stromabnehmers ist, wird dieser Wert bei dem Verfahren nach Anspruch 2 vorteilhaft als regelungstechnischer Sollwert verwendet.

Fallen der Wankpol des Fahrzeugs und der Neigepol des Wagenkastens nicht zusammen, so führt die Ausrichtung des Stromabnehmers lotrecht zum Gleis bei einfachen Ausführungen der Stelleinrichtung (gestattet im wesentlichen nur Drehbewegungen) zu einem im allgemeinen geringen Versatz der Stromabnehmer-Mittenlage zur Mitte der Fahrdrahtebene. Diese Abweichung kann durch eine entsprechende Ausführung der Konstruktion minimiert werden.

Eine Ausrichtung der Stromabnehmer-Mittenlage auf die Mitte oder nahezu die Mitte der Fahrdrahtebene unter Berücksichtigung der Wankbewegung des Fahrzeugs ist mit regelungstechnischen Mitteln auch bei einfachen Ausführungen der Stelleinrichtung (die im wesentlichen nur eine Drehbewegung des Stromabnehmers ermöglicht) möglich. Dazu kann der gemäß Anspruch 2 als regelungstechnischer Sollwert verwendete Rollwinkel-Istwert $\alpha_{WK}$ um einen Zusatzsollwert $\alpha_{FD}$ ergänzt werden. $\alpha_{FD}$ ist dabei der Winkel zwischen dem Lot auf die Gleisebene und der Geraden durch die Mitte der Fahrdrahtebene und durch den Neigepol des Stromabnehmers. Die genaue Bestimmung des Zusatzsollwertes $\alpha_{FD}$ erfordert neben der Kenntnis von Fahrzeugdaten auch die Kenntnis der Fahrdrahthöhe. Ist diese nicht genau bekannt, kann als Schätzwert auch eine mittlere Fahrdrahthöhe verwendet werden. Damit erfolgt die Ausrichtung des Stromabnehmers allerdings nur nahezu zur Mitte der Fahrdrahtebene. Ähnlich können auch Querverschiebungen des Wagenkastens ausgeglichen werden.

Der Rollwinkel-Istwert $\alpha_{WK}$ beinhaltet sowohl die Neigebewegung des Wagenkastens als auch die Wankbewegung des Fahrzeugs. Definitionsgemäß kann er sehr einfach aus der Differenz zwischen dem Istwert der Absolutneigung $\varphi_{WK}$ und dem Gleisneigungswinkel $\varphi_{Gleis}$ ermittelt werden. Dieses Verfahren gemäß Anspruch 5 ist insbesondere dann vorteilhaft, wenn Fahrzeuge mit Neigetechnik bereits für die Wagenkastenneigung mit entsprechenden Lagesensoren ausgerüstet sind.

Häufig wird auf Fahrzeugen mit Neigetechnik nicht der Gleisneigungswinkels $\varphi_{Gleis}$ sondern der Absolutwinkel $\varphi_{DG}$ des Drehgestells gemessen, da hier die Stoßbeanspruchung der Sensoren aufgrund der Primärfederung geringer ist. In diesem Fall kann der Gleisneigungswinkels $\varphi_{Gleis}$ - wie in Anspruch 6 beschrieben - vorteilhaft gemäß der Beziehung

$$\varphi_{Gleis} = \varphi_{DG} + \alpha_{prim}$$

ermittelt werden. Wird der Wankwinkel der Primärfederung nicht direkt gemessen, so kann aus der Messung der Querbeschleunigung $a_q$ in Gleisebene ein Schätzwert für $\alpha_{prim}$ bestimmt werden. Die Querbeschleunigung $a_q$ in Gleisebene ist mit relativ einfachen Mitteln zu messen und steht bei Fahrzeugen mit Wagenkastenneigung meist zur Verfügung. Gegebenenfalls kann auch die Dynamik der Wankbewegung im Schätzwert berücksichtigt werden.

Äquivalent zur Bestimmung des Rollwinkels $\alpha_{prim}$ kann auch der Rollwinkel $\alpha_{sek}$ der Sekundärfederung entweder gemessen oder aus der Querbeschleunigung $a_q$ in Gleisebene ermittelt werden. Dies ist erforderlich, falls der Absolutwinkel des Drehgestells nur bezüglich des Pendelträgers (Wiege des Drehgestells), d. h. oberhalb der Sekundärfederung, gemessen werden kann.

Steht der Absolutwinkel $\varphi_{WK}$ des Wagenkastens oder der Absolutwinkel $\varphi_{Gleis}$ der Gleislage bzw. der Absolutwinkel $\varphi_{DG}$ des Drehgestells nicht zur Verfügung, weil entweder keine entsprechende Meßvorrichtung vorgesehen ist oder weil die Meßsignale der Absolutwinkel gestört sind, so kann der erforderliche Rollwinkel-Istwert $\alpha_{WK}$ gemäß Anspruch 8 auch aus dem Neigewinkel $\alpha_N$ des Wagenkastens ermittelt werden. Die dazu erforderlichen Rollwinkel $\alpha_{prim}$ und $\alpha_{sek}$ der Primärfederung und der Sekundärfederung können wie oben beschrieben ermittelt werden. Mit der Bestimmung des Rollwinkel-Istwertes $\alpha_{WK}$ gemäß Anspruch 8 steht ein redundantes Verfahren zur Ermittlung des Rollwinkel-Istwertes $\alpha_{WK}$ zur Verfügung, was zu einer Erhöhung der Verfügbarkeit und Sicherheit der Stromabnehmerneigung und/oder Stromabnehmerpositionierung führt.

Bei Fahrzeugen ohne Wagenkastenneigung ist der Neigewinkel $\alpha_N = 0$, so daß mit dem obengenannten Verfahren ein Ausgleich allein des Wankwinkels möglich ist. Für den Ausgleich des Wankwinkels ist nur die Ermittlung des Rollwinkels $\alpha_{prim}$ der Primärfederung und des Rollwinkels $\alpha_{sek}$ der Sekundärfederung erforderlich. Meßeinrichtungen für die Winkel $\varphi_{WK}$, $\varphi_{Gleis}$, $\varphi_{DG}$ oder $\alpha_N$ sind für den Ausgleich nur des Wankwinkels nicht unbedingt erforderlich, da Schätzwerte aus der Querbeschleunigung $a_q$ in Gleisebene, wie oben beschrieben, im allgemeinen ausreichend sind.

Der für die Neigung und/oder Positionierung des Stromabnehmers erforderliche Neigewinkel-Istwert $\alpha_{StA}$ des Stromabnehmers kann mit verschiedenen Methoden gemessen werden. Vorteilhaft zieht man zur Bestimmung des Neigewinkel-Istwerts $\alpha_{StA}$ des Stromabnehmers die Auslenkung der Stelleinrichtung des Stromabnehmers heran (Anspruch 10), da entsprechende Meßeinrichtungen in einfacher Weise in die Stelleinrichtung integriert werden können (z.B. elektrischer Stellantrieb mit integriertem Lagemeßsystem). Alternativ kann zur Bestimmung des Neigewinkel-Istwerts $\alpha_{StA}$ des Stromabnehmers auch direkt die Lage des Trägers des Stromabnehmers bestimmt werden (Anspruch 11). Da es sich hierbei um eine direkte Messung der Stromabnehmer-Lage handelt, ist auch bei Fehlern in der Stelleinrichtung eine sichere Bestimmung des Neigewinkel-Istwertes $\alpha_{StA}$ gewährleistet. Aus Sicherheits- und Redundanzgründen kann es sich auch als zweckmäßig erweisen, beide Meßverfahren gleichzeitig einzusetzen.

Die zur Neigung und/oder Positionierung des Stromabnehmers erforderlichen Stellsignale können aus den Daten der Stellvorrichtung, dem Rollwinkel-Istwert $\alpha_{WK}$, dem Istwert der Absolutneigung $\varphi_{WK}$ des Wagenkastens sowie dem Neigewinkel-Istwert $\alpha_{StA}$ des

Stromabnehmers näherungsweise direkt berechnet werden. Überlagert man dem gemäß Anspruch 2 erzeugten Stellsignal vorsteuernd die nach Anspruch 12 bestimmten Stellsignale, so können dynamische und stationäre Abweichungen von der gewünschten Stromabnehmerlage reduziert werden, da durch die Vorsteuerung die im allgemeinen dynamisch langsameren Regeleinrichtungen von Führungsaufgaben entlastet werden.

Die zur Ermittlung des Rollwinkel-Istwerts $\alpha_{WK}$ eingesetzten Meßverfahren werden im allgemeinen eine mehr oder weniger große Verzögerung aufweisen, die das dynamische Verhalten des Stellsystems beinflußt, d.h. zu dynamischen Abweichungen von der gewünschten Stromabnehmerneigung bzw. Stromabnehmerposition führt. Diese Probleme können verringert werden, wenn zusätzlich zum Rollwinkel-Istwert $\alpha_{WK}$ auch der Rollwinkel-Sollwert $\alpha^*_{WK}$ der Wagenkasten-Neigeregelung und/oder der Sollwert $\varphi_{WK}^*$ für die Absolutneigung des Wagenkastens zur Bildung des Stellsignals herangezogen wird (Anspruch 13), da im Sollwert keine Verzögerungen durch Meß- und/oder Filtereinrichtungen wirksam sind. Bei Verwendung des Rollwinkel-Sollwerts $\alpha^*_{WK}$ muß das Zeitverhalten der Wagenkastenneigung in geeigneter Weise berücksichtigt werden.

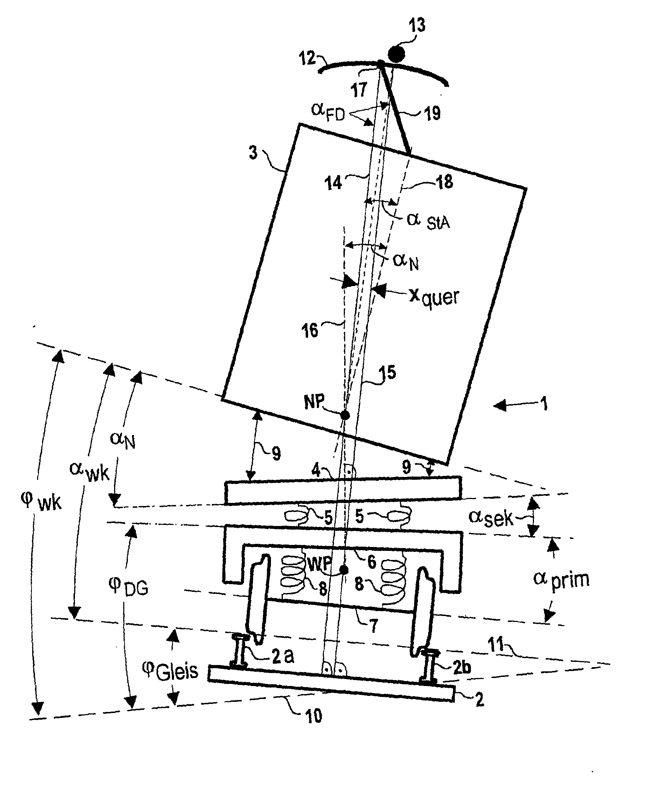

Zur weiteren Erläuterung der Erfindung wird auf die Zeichnung Bezug genommen, in der ein Ausführungsbeispiel des erfindungsgemäßen Verfahrens an einem im Querschnitt gezeigten Wagen eines Schienenfahrzeugs schematisch dargestellt ist.

In der Zeichnung ist mit 1 ein Wagen eines Schienenfahrzeugs bezeichnet, der ein Gleis 2 befährt. Der Wagen 1 umfaßt einen Wagenkasten 3 , der gegenüber zwei Pendelträgern 4 oder dergleichen (z.B. zwei Wiegen) quer zur Fahrtrichtung schwenkbar ist. Von den beiden Pendelträgern 4 ist in der Zeichnung nur der in Fahrtrichtung vordere Pendelträger sichtbar.

Jeder Pendelträger 4 ist über eine Sekundärfederung 5 auf einem als Drehgestell ausgebildeten Fahrwerk 6 abgestützt. Im Drehgestell 6 sind zwei Radpaare 7 angeordnet, von denen in der Zeichnung nur ein Radpaar 7 sichtbar ist.

Die Radpaare 7 sind über Primärfederungen 8 federnd in den Drehgestellen 6 gehalten.

Zwischen den Pendelträgern 4 und dem Wagenkasten 3 ist eine aktive Neigemechanik 9 angeordnet, durch die der Wagenkasten 3 gegenüber den Pendelträgern 4 geneigt werden kann.

Bei einer Kurve ist die kurvenäußere Schiene 2a gegenüber der kurveninneren Schiene 2b, die in der Erdhorizontalen 10 liegt, überhöht. Die Gleisebene 11 ist damit um einen Gleisneigungswinkel $\varphi_{Gleis}$ gegenüber der Erdhorizontalen 10 geneigt.
Bei Kurvenfahrt neigt sich das Drehgestell 6 gegenüber den Radpaaren 7 jeweils um einen Rollwinkel $\alpha_{prim}$ der Primärfederung 8 nach Kurvenaußen. Gleichzeitig neigt sich der Pendelträger 4 gegenüber dem Drehgestell 6 um einen Rollwinkel $\alpha_{sek}$ der Sekundärfederung 5 ebenfalls nach Kurvenaußen.

Der Gleisneigungswinkel $\varphi_{Gleis}$ läßt sich damit aus der Beziehung

$$\varphi_{Gleis} = \varphi_{DG} + \alpha_{prim}$$

ermitteln.

Weiterhin wird der Neigewinkel $\alpha_N$ zwischen dem Wagenkasten 3 und dem Pendelträger 4 gemessen ($\alpha_N$ findet sich damit ebenfalls zwischen dem Lot 16 auf den Pendelträger 4 und der Mittelsenkrechten 18 des Wagenkastens 3).

Auf dem Wagenkasten 3 ist ein Stromabnehmer 12 angeordnet, der über eine aktive Neigemechanik 19 gegenüber dem Wagenkasten geneigt und/oder verschoben werden kann. Bei geneigtem Wagenkasten 3 wird der Stromabnehmer 12 mittels der Neigemechanik 19 um einen Neigewinkel-Istwert $\alpha_{StA}$ relativ zum Wagenkasten 3 geneigt. Der Neigepol NP des Stromabnehmers 12 muß dabei nicht unbedingt mit dem Neigepol des Wagenkastens 3 übereinstimmen.

Die Neigung des Wagenkastens 3 gegenüber der Erdhorizontalen 10 ist durch den Istwert der Absolutneigung $\varphi_{WK}$ des Wagenkastens 3 gegeben. Die Gleisebene 11 ist gegenüber der Erdhorizontalen 10 um den Gleisneigungswinkel $\varphi_{Gleis}$ geneigt. Da der Gleisneigungswinkel $\varphi_{Gleis}$ in der Absolutneigung $\varphi_{WK}$ des Wagenkastens 3 enthalten ist, ergibt sich der Rollwinkel-Istwert $\alpha_{WK}$ zwischen Wagenkasten 3 und Gleisebene 11 aus der Beziehung

$$\alpha_{WK} = \varphi_{WK} - \varphi_{Gleis}$$

Der Rollwinkel-Istwert $\alpha_{WK}$ setzt sich zusammen aus dem Neigewinkel $\alpha_N$ des Wagenkastens 3, der sich aufgrund der Neigung des Wagenkastens 3 mittels der aktiven Neigemechanik 9 ergibt, und den Rollwinkeln $\alpha_{prim}$ und $\alpha_{sek}$ der Primär- und Sekundärfederung, die sich aufgrund der Wankbewegung des Wagenkastens 3 nach Kurvenaußen ergibt. Für den Rollwinkel-Istwert $\alpha_{WK}$ gilt deshalb auch die Beziehung

$$\alpha_{WK} = \alpha_N - \alpha_{prim} - \alpha_{sek}$$

Ist der Wagenkasten 3 um den Rollwinkel-Istwert $\alpha_{WK}$ gegenüber der Gleisebene 11 geneigt, so ist die Wagenkastenmitte 18 gegenüber dem Lot 14 und 15 auf die Gleisebene 11 ebenfalls um den Rollwinkel-Istwert $\alpha_{WK}$ geneigt.

Wird die Neigung des Stromabnehmers 12 mittels der Neigemechanik 19 des Stromabnehmers 12 so eingestellt, daß der Neigewinkel-Istwert $\alpha_{StA}$ des Stromabnehmers 12 gleich dem Rollwinkel-Istwert $\alpha_{WK}$ des Wagenkastens 3 wird, so ist der Stromabnehmer 12 lotrecht zur Gleisebene 11 und damit auch lotrecht zur Fahrdrahtebene ausgerichtet.

Für den dazu erforderlichen Neigewinkel Sollwert $\alpha_{StA}{}^*$ der Neigung des Stromabnehmers 12 gilt gemäß obigen Gleichungen die Beziehung

$$\alpha^*{}_{StA} = \alpha_{WK} \qquad = \varphi_{WK} - \varphi_{Gleis}$$

$$= \varphi_{WK} - (\varphi_{DG} + \alpha_{prim})$$

$$= \alpha_N - \alpha_{prim} - \alpha_{sek}$$

Fallen der Wankpol WP des Wagens 1 und der Neigepol NP des Stromabnehmers 12 nicht zusammen, so tritt, bei Ausrichtung des Stromabnehmers 12 lotrecht zur Gleis- bzw. Fahrdrahtebene, zwischen der Mitte 17 des Stromabnehmers 12 und der Mitte 13 der Fahrdrahtebene eine im allgemeinen geringfügige Querverschiebung $x_{quer}$ auf. Durch eine zusätzliche Neigung des Stromabnehmers 12 um den Winkel $\alpha_{FD}$ kann diese Abweichung ebenfalls korrigiert werden.

Die Primärfederung 8 und die Sekundärfederung 5 können auch zu einer Querverschiebung des Wagenkastens 3 gegenüber der Gleisebene 11 führen. Die dadurch bedingte zusätzliche Querverschiebung der Stromabnehmermitte gegenüber der Mitte der Fahrdrahtebene können, falls erforderlich, über einen weiteren Zusatzwinkel korrigiert werden.

Alternativ kann zur Korrektur der Querverschiebung $x_{quer}$ die Neigemechanik 19 auch so ausgeführt werden, daß zusätzlich zur Neigebewegung des Stromabnehmers 12 auch eine Querverschiebung des Stromabnehmers 12 möglich ist.

**Patentansprüche**

1. Verfahren zur Neigung und/oder Positionierung eines auf einem Wagenkasten (3) angeordneten Stromabnehmers (12), das folgende Merkmale umfaßt:

   - Ermittlung wenigstens eines Rollwinkel-Istwertes ($\alpha_{WK}$) zwischen dem Wagenkasten (3) und der Gleisebene (11),
   - Ermittlung wenigstens eines Neigewinkel-Istwertes ($\alpha_{StA}$) für den Stromabnehmer (12) relativ zum Wagenkasten (3),
   - Erzeugung wenigstens eines Stellsignals für wenigstens eine Stelleinrichtung des Stromabnehmers (12) aus dem Rollwinkel-Istwert ($\alpha_{WK}$) und dem Neigewinkel-Istwert ($\alpha_{StA}$).

2. Verfahren nach Anspruch 1, wobei der Rollwinkel-Istwert ($\alpha_{WK}$) den regelungstechnischen Sollwert ($\alpha^*{}_{StA}$) für die Erzeugung des Stellsignals bildet.

3. Verfahren nach Anspruch 1 oder 2, wobei der Stromabnehmer durch die Stelleinrichtung lotrecht oder nahezu lotrecht zur Gleisebene (11) ausgerichtet wird.

4. Verfahren nach Anspruch 1 oder 2, wobei die Mitte des Stromabnehmers auf die Mitte oder nahezu auf die Mitte der Fahrdrahtebene ausgerichtet wird.

5. Verfahren nach Anspruch 1, wobei der Rollwinkel-Istwert ($\alpha_{WK}$) aus dem Istwert der Absolutneigung ($\varphi_{WK}$) des Wagenkastens (3) und aus dem Gleisneigungswinkel ($\varphi_{Gleis}$) gemäß der Beziehung

   $$\alpha_{WK} = \varphi_{WK} - \varphi_{Gleis}$$

   ermittelt wird.

6. Verfahren nach Anspruch 5, wobei der Gleisneigungswinkel ($\varphi_{Gleis}$) aus dem Absolutneigewinkel ($\varphi_{DG}$) des Fahrwerks (6) und dem Rollwinkel ($\alpha_{prim}$) der Primärfederung (8) gemäß der Beziehung

   $$\varphi_{Gleis} = \varphi_{DG} + \alpha_{prim}$$

   ermittelt wird.

7. Verfahren nach Anspruch 6, wobei der Rollwinkel ($\alpha_{Prim}$) der Primärfederung (8) meßtechnisch ermittelt oder als Schätzwert aus der Zentrifugalbeschleunigung ($a_q$) in Horizontalebene (10) vorgegeben wird.

8. Verfahren nach Anspruch 1, wobei der Rollwinkel-Istwert ($\alpha_{WK}$) aus dem Neigewinkel ($\alpha_N$) des Wagenkastens (3), dem Rollwinkel ($\alpha_{prim}$), der Primärfederung (8) und dem Rollwinkel ($\alpha_{sek}$) der Sekundärfederung (5) gemäß der Beziehung

   $$\alpha_{WK} = \alpha_N - \alpha_{prim} - \alpha_{sek}$$

   gebildet wird.

9. Verfahren nach Anspruch 8, wobei der Rollwinkel $\alpha_{prim}$ der Primärfederung (8) und/oder der Rollwinkel $\alpha_{sek}$ der Sekundärfederung (5) meßtechnisch ermittelt oder als Schätzwert aus der Zentrifugalbeschleunigung ($a_q$) in Horizontalebene (10) ermittelt wird.

10. Verfahren nach Anspruch 1, wobei der Neigewinkel-Istwert ($\alpha_{StA}$) des Stromabnehmers (12) relativ zum Wagenkasten (3) aus einer Auslenkung wenigstens einer Stelleinrichtung des Stromabnehmers (12) ermittelt wird.

**11.** Verfahren nach Anspruch 1, wobei der Neigewinkel-Istwert ($\alpha_{StA}$) des Stromabnehmers (12) aus der relativen Lage seines Trägers zum Wagenkasten (3) ermittelt wird.

**12.** Verfahren nach Anspruch 2, wobei der Istwert der Absolutneigung des Wagenkastens ($\varphi_{WK}$) und/oder der Rollwinkel-Istwert ($\alpha_{WK}$) und/oder der Neigewinkel-Istwert ($\alpha_{StA}$) vorsteuernd dem Stellsignal additiv überlagert werden.

**13.** Verfahren nach Anspruch 2 oder 12, wobei zur Ermittlung des Rollwinkel-Istwertes ($\alpha_{WK}$) zusätzlich der Sollwert des Absolutneigewinkels ($\alpha^*_{WK}$) des Wagenkastens (3) oder eine dazu äquivalente Größe verwendet wird.

**Claims**

**1.** Process for tilting and/or positioning a pantograph (12) disposed on a waggon body (3), said process including the following features:

- determination of at least one roll angle actual value ($\alpha_{WK}$) between the waggon body (3) and the track plane (11),
- determination of at least one tilt angle actual value ($\alpha_{StA}$) for the pantograph (12) relative to the waggon body (3),
- generation of at least one actuating signal for at least one actuating device of the pantograph (12) from the roll angle actual value ($\alpha_{WK}$) and the tilt angle actual value ($\alpha_{StA}$).

**2.** Process according to Claim 1, wherein the roll angle actual value ($\alpha_{WK}$) forms the control setpoint ($\alpha^*_{StA}$) for the generation of the actuating signal.

**3.** Process according to Claim 1 or 2, wherein the pantograph is aligned by the actuating device vertically or virtually vertically to the track plane (11).

**4.** Process according to Claim 1 or 2, wherein the centre of the pantograph is aligned at the centre or virtually at the centre of the contact wire plane.

**5.** Process according to Claim 1, wherein the roll angle actual value ($\alpha_{WK}$) is determined from the actual value of the absolute tilt ($\varphi_{WK}$) of the waggon body (3) and from the track tilt angle ($\varphi_{track}$) according to the relationship

$$\alpha_{WK} = \varphi_{WK} - \varphi_{track}$$

**6.** Process according to Claim 5, wherein the track tilt angle ($\varphi_{track}$) is determined from the absolute tilt angle ($\varphi_{DG}$) of the bogie (6) and from the roll angle ($\alpha_{prim}$) of the primary suspension (8) according to the relationship

$$\varphi_{track} = \varphi_{DG} + \alpha_{prim}$$

**7.** Process according to Claim 6, wherein the roll angle ($\alpha_{prim}$) of the primary suspension (8) is determined by measurement or is specified as an estimated value from the centrifugal acceleration ($a_q$) in the horizontal plane (10).

**8.** Process according to Claim 1, wherein the roll angle actual value ($\alpha_{WK}$) is generated from the tilt angle ($\alpha_N$) of the waggon body (3), the roll angle ($\alpha_{prim}$) of the primary suspension (8) and the roll angle ($\alpha_{sec}$) of the secondary suspension (5) in accordance with the relationship

$$\alpha_{WK} = \alpha_N - \alpha_{prim} - \alpha_{sec}$$

**9.** Process according to Claim 8, wherein the roll angle ($\alpha_{prim}$) of the primary suspension (8) and/or the roll angle ($\alpha_{sec}$) of the secondary suspension (5) is determined by measurement or is determined as an estimated value from the centrifugal acceleration ($a_q$) in the horizontal plane (10).

**10.** Process according to Claim 1, wherein the tilt angle actual value ($\alpha_{StA}$) of the pantograph (12) relative to the waggon body (3) is determined from a deflection of at least one actuating device of the pantograph (12).

**11.** Process according to Claim 1, wherein the tilt angle actual value ($\alpha_{StA}$) of the pantograph (12) is determined from the relative position of its support on the waggon body (3).

**12.** Process according to Claim 2, wherein the actual value of the absolute tilt of the waggon body ($\varphi_{WK}$) and/or the roll angle actual value ($\alpha_{WK}$) and/or the tilt angle actual value ($\alpha_{StA}$) are additively superimposed on the actuating signal as precontrol.

**13.** Process according to Claim 2 or 12, wherein in order to determine the roll angle actual value ($\alpha_{WK}$), the setpoint of the absolute tilt angle ($\alpha^*_{WK}$) of the waggon body (3) or an equivalent variable is additionally used.

**Revendications**

**1.** Procédé pour incliner et/ou positionner un pantographe (12) monté sur une caisse de wagon (3) qui possède les caractéristiques suivantes :

- détermination d'au moins une valeur réelle d'angle de roulis ($\alpha_{WK}$) entre la caisse de wagon (3) et le plan (11) de la voie,
- détermination d'au moins une valeur réelle d'angle d'inclinaison ($\alpha_{StA}$) pour le pantographe (12) par rapport à la caisse (3),
- génération d'au moins un signal de réglage (12) à partir de la valeur réelle d'angle de roulis ($\alpha_{WK}$) et de la valeur réelle d'angle d'inclinaison ($\alpha_{StA}$).

2. Procédé selon la revendication 1, dans lequel la valeur réelle d'angle de roulis ($\alpha_{WK}$) forme la valeur théorique de réglage ($\alpha^*_{StA}$) pour la génération du signal de réglage.

3. Procédé selon la revendication 1 ou 2, dans lequel le pantographe est orienté par le dispositif de réglage perpendiculairement ou à peu près perpendiculairement au plan (11) de la voie.

4. Procédé selon la revendication 1 ou 2, dans lequel le milieu du pantographe est aligné avec le milieu ou à peu près avec le milieu du plan du conducteur aérien.

5. Procédé selon la revendication, dans lequel la valeur réelle d'angle de roulis ($\alpha_{WK}$) est déterminée à partir de la valeur réelle d'inclinaison absolue ($\alpha_{WK}$) de la caisse de wagon (3) et de l'angle d'inclinaison de la voie ($\varphi_{VOIE}$) selon la relation

$$\alpha_{WK} = \varphi_{WK} + \varphi_{VOIE}.$$

6. Procédé selon la revendication 5, dans lequel l'angle d'inclinaison de voie ($\varphi_{VOIE}$) est déterminé à partir de l'angle d'inclinaison absolue ($\varphi_{DG}$) du dispositif de roulement (6) et de l'angle de roulis ($\alpha_{prim}$) de la suspension primaire (8) selon la relation

$$\varphi_{VOIE} = \varphi_{DC} + \alpha_{prim}.$$

7. Procédé selon la revendication 6, dans lequel l'angle de roulis ($\alpha_{prim}$) de la suspension primaire (8) est déterminé mécaniquement ou est prédéterminé comme valeur estimative à partir de l'accélération centrifuge ($a_q$) dans un plan horizontal (10).

8. Procédé selon la revendication 1, dans lequel la valeur réelle de roulis ($\alpha_{WK}$) est formée à partir de l'angle d'inclinaison ($\alpha_N$) de la caisse de wagon (3), de l'angle de roulis ($\alpha_{prim}$) de la suspension primaire (8) et de l'angle de roulis ($\alpha_{sec}$)

$$\alpha_{WK} = \alpha_N - \alpha_{prim} - \alpha_{sec}.$$

9. Procédé selon la revendication 8, dans lequel l'angle de roulis ($\alpha_{prim}$) de la suspension (8) et/ou l'angle de roulis ($\alpha_{sec}$) de la suspension secondaire (5) est déterminé mécaniquement ou bien est déterminé en tant que valeur estimative à partir de l'accélération centrifuge ($a_q$) dans un plan horizontal (10).

10. Procédé selon la revendication 1, dans lequel la valeur réelle d'angle d'inclinaison ($\alpha_{StA}$) du pantographe (12) par rapport à la caisse de wagon (3) est déterminée à partir d'une excursion d'au moins un dispositif de réglage du pantographe (12).

11. Procédé selon la revendication 1, dans lequel la valeur réelle d'angle d'inclinaison ($\alpha_{StA}$) du pantographe (12) est déterminée à partir de la position relative de son support par rapport à la caisse de wagon (3).

12. Procédé selon la revendication 2, dans lequel la valeur réelle de l'inclinaison absolue de la caisse de wagon ($\varphi_{WK}$) et/ou de la valeur réelle d'angle de roulis ($\alpha_{WK}$) et/ou la valeur réelle d'angle d'inclinaison ($\alpha_{StA}$) est superposée additivement par commande pilote au signal de réglage.

13. Procédé selon la revendication 2 ou 12, dans lequel la valeur théorique de l'angle d'inclinaison absolu ($\alpha^*_{NK}$) de la caisse de wagon (3) ou une grandeur équivalente est utilisée en plus en vue de déterminer la valeur réelle d'angle de roulis ($\alpha_{WK}$).